(19) **Europäisches Patentamt**

**European Patent Office**

**Office européen des brevets**

(11) **EP 0 939 294 B1**

(12) **EUROPEAN PATENT SPECIFICATION**

(45) Date of publication and mention
of the grant of the patent:
**09.06.2004 Bulletin 2004/24**

(51) Int Cl.$^7$: **G01B 11/06**, G01B 11/24,
G01B 11/30

(21) Application number: **98301410.1**

(22) Date of filing: **26.02.1998**

(54) **Determining topographical values**

Bestimmung von topographischen Werten

Détermination de valeurs topographiques

(84) Designated Contracting States:
**CH DE LI**

(43) Date of publication of application:
**01.09.1999 Bulletin 1999/35**

(73) Proprietor: **Agilent Technologies, Inc. (a Delaware corporation)**
**Palo Alto, CA 94303 (US)**

(72) Inventor: **Toh, Peng Seng**
**No. 07-05, Parc Oasis, Singapore 609774 (SG)**

(74) Representative: **Powell, Stephen David et al**
**WILLIAMS POWELL**
**Morley House**
**26-30 Holborn Viaduct**
**London EC1A 2BP (GB)**

(56) References cited:
**WO-A-93/11403**       **DE-A- 19 524 498**
**US-A- 5 033 856**

• **PATENT ABSTRACTS OF JAPAN vol. 097, no. 010, 31 October 1997 & JP 09 145318 A (NIKON CORP), 6 June 1997,**

**Description**

This invention relates to techniques for the measurement of object height and volume, more particularly to measuring heights of features on a printed circuit board by optical imaging. Hybrid confocal microscopy may be employed.

There are many applications that require the measurement of height and volume using noncontact means. For example, the very first step in a surface-mount printed circuit board assembly process is the printing of solder paste onto the solder pads. In this case, the amount of solder paste deposition onto the solder pad is crucial to the integrity of the assembled printed circuit board. A wrong amount of solder will cause poor solder joint. Excessive solder paste will cause bridging between adjacent pads. Less solder paste will cause poor contact In another example, the wire bonding process connects a wire from the bond pad of a semiconductor die to a lead of a lead frame. This process requires the measurement of the wire loop height and the ball height.

It can be observed that most of the existing on-line methods of measuring the height and volume of object such as solder paste rely on sampling of several points on the deposition. Sampling measurement does not provide sufficient data and information for effective process control. On the other hand, detailed measurement which covers the entire solder paste deposition is time consuming which can only be carried out off-line. In the case of measuring the wire loop and ball height in the wire bonding application. manual techniques relying on focusing are commonly used. This technique is difficult to be automated and is slow and is in nature.

Laser structured light and confocal scanning laser microscopy approaches are the two common methods for the measurement of object height and volume. The laser structured light approach makes use of a laser line projector to project a finely focused light strip over the solder paste. This displacement of the light strip from its original axis is observed. Using triangulation principle, the displacement of the light strip is used to calculated the height of an object.

In the method of scanning confocal light-optical microscopy, the focusing of laser beams can be measured to determine the height of object. The entire solder paste deposition can be measured using the scanning confocal light-optical microscopy method. However, this method is time consuming and can only be applied off-line.

WO 93/11403 discloses a lens assembly which, after directing light from a source to an object, redirects light to beam splitters before further focusing, and a plurality of light detectors, onto which light converged by further lenses is directed with different degree of focus due to differences in path lengths.

Fig. 1 The block diagram of the present invention.
Fig. 2 An illustration of the depth of field effect associated with an optical system using a thin lens model.
Fig. 3 The multiple imaging paths of the optical system focused at different height planes in the object space.
Fig. 4 Feature extraction using threshold-intensity-transform method.
Fig. 5 Flow chart illustrating the operational procedure of the present invention.
Fig. 6 An example of the determination of the best-focal-plane for an objection feature is shown in Fig 6A.

According to a first aspect of the present invention, there is provided an apparatus for determining topographical variation on the surface of an object, comprising:

a lens that acquires images of the object;
a plurality of beam splitters that are cascaded to receive the images of the object from the lens and that split the images along multiple imaging paths;
image sensors that sense the images along the multiple imaging paths; and
an image processor; characterised in that
each of the image sensors includes multiple pixels to detect variation in the image from the corresponding imaging path; and in that
the image processor processes the sensed images to determine topographical values of the surface of the object based on the variation within each of the sensed images as well as the variation among the sensed images.

According to a second aspect of the present invention, there is provided a method for determining topographical variation on the surface of an object comprising:

acquiring object light passing from the surface of the object as a field of view to be split into different light paths and diverting it by focusing the same field of view to a distance farther than plurality of beam splitters (2,4,11) used for splitting the beams;
with the beam splitters splitting repeatedly light passing from the surface associated with the field of view to obtain multiple beam paths;
sensing light transmitted on each different light path to form an image of the field of view of the surface, the light paths having different path lengths due to the focusing on light detectors used for the sensing to achieve different degree of focus on the image, each light detector including multiple pixels and detecting variation in the image from the corresponding imaging part, and

determining topographical values of the surface of the object based on the different in degree of focus on the light detectors by processing the sensed images to determine topographical values of the surface of the object based on the variation within each of the sensed images as well as the variation among the sensed images.

In preferred embodiments of the present invention, a method uses multiple imaging paths, with each path set to a different image distance, to acquire multiple images of the object through a common field of view. An image sensor is attached to each of the imaging paths to acquire images of the object. The multiple imaging paths are set to different image distance and hence the corresponding object distance is different from one another. Images appearing on the image sensors attached at different imaging paths are focused at different heights in the object space. A corresponding number of height planes are created in the object space by the multiple imaging paths. Object features having different heights will appear with different degree-of-focus at a particular imaging path. Object features that are located within the present objective distance of a particular imaging path will appear focused on that image sensor. According to the present invention, the height of an object feature is computed according to the degree-of-focus of the images acquired by the different imaging paths. Image processing techniques are used to measure the degree-of-focus of an image acquired by a frame grabber from the image sensors of the multiple imaging paths. The variable degree-of-focus gathered from the multiple image paths and sensors are used to compute the height and the volume of the features of the object.

The present inventions also disclosed an embodiment of an apparatus having optics, image processor and X-Y scanner. The optics disclosed in the invention includes multiple imaging paths created by the use of multiple beam splitters with a common objective lens. The objective lens is positioned in between the object and the multiple beam splitters. The multiple beam splitter splits the image into multiple paths. Each of the imaging path is attached with an image sensor such as a charge coupled device CCD sensor. The multiple image sensors of the optical means are connected to the image processor in which frame grabbers are used to digitize the images for image processing and analysis. Image processing techniques are applied to the images to identify the features of interest, determine the degree-of-focus on each of the images, compute the height information and make decision on acceptance or rejection according to pre-stored criteria. The XY scanner is used in conjunction with the optics and image processor to cover a large area. The X-Y scanner will either move the optics of the present invention or the object so that a area larger than a single field-of-view is covered.

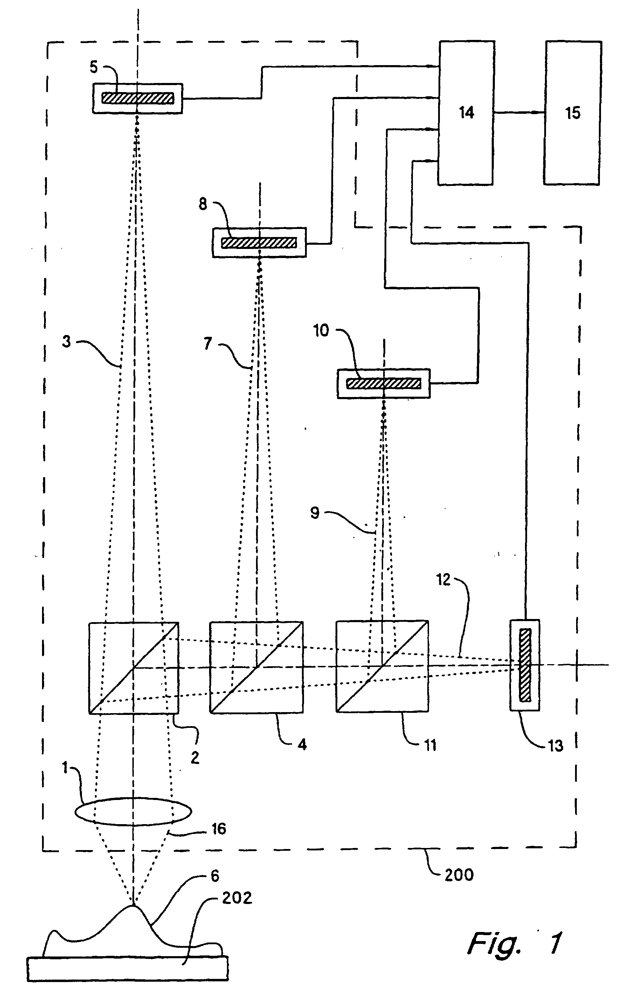

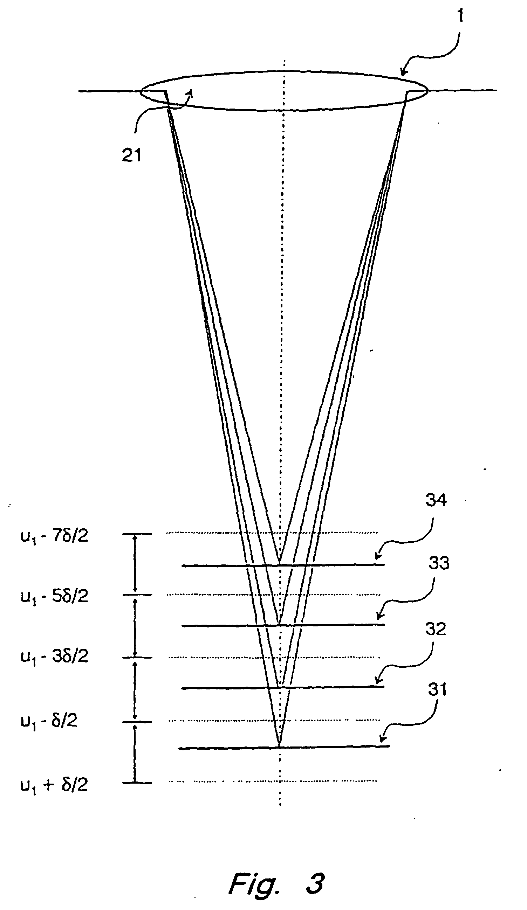

As shown in Figure 1, one embodiment of the present invention includes an objective lens 1 and multiple beam splitters 2, 4 and 11, to form multiple imaging paths 3, 7, 9 and 12; each of the imaging paths has an image sensor 5, 8, 10, and 13. The image sensors 5, 8, 10 and 13 are connected to a frame grabber 14 so that the respective images can be read and processed by an image processor such as a host computer 15. Each of the imaging paths 3, 7, 9, and 12 is predetermined to focus at a different object distance on the common field of view 16 containing the object 6. A corresponding number of height planes 31, 32, 33, and 34 (see Figure 3) are created by the multiple imaging paths 3, 7, 9 and 12 in the object space. The objective lens 1, the multiple beam splitters, and the multiple image sensors are enclosed in a light shield casing collectively known as the optical system 200.

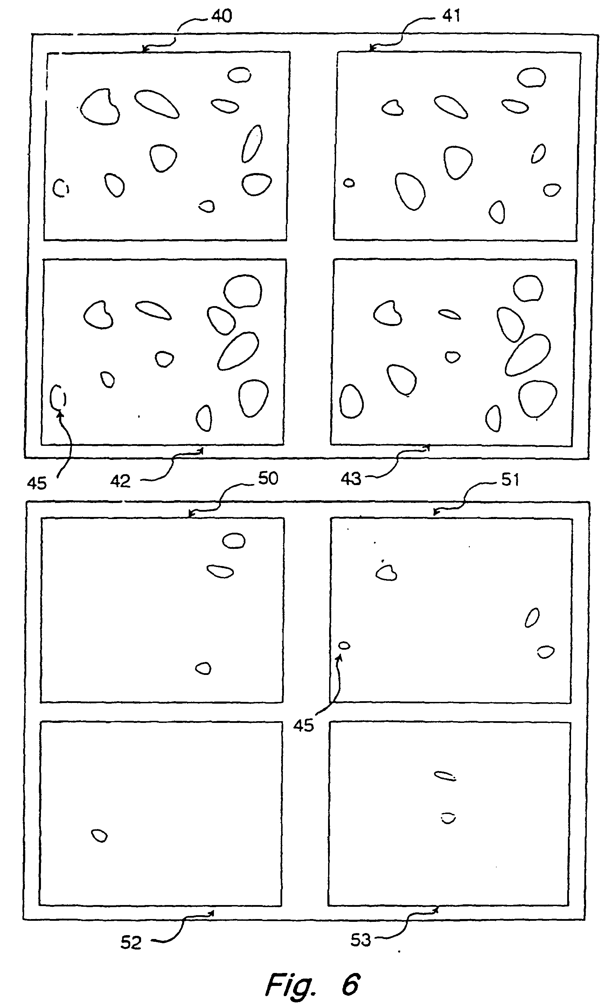

Images 40, 41, 42 and 43 (see Figure 6) acquired from the image sensors 5, 8, 10 and 13 attached to the multiple imaging paths 3, 7, 9, and 12 are digitized by the frame grabber 14 and communicated to the host computer 15. The images 40, 41, 42 and 43 are subject to image intensity correction as each of the images has different intensity due to the effect of the beam splitters 2, 4 ad 11. A beam splitter splits an incoming image into two paths, hence reducing the intensity of the splitted images. The image intensity correction method equalizes the mean intensity of the different images to a nominal value. Noise removal techniques such as the threshold-intensity-transform method can be applied to remove the background noise. Object features 45 are then evaluated after the images have been corrected and noise removed.

In Figure 1, the object 6 is being placed on a X-Y scanning mechanism 202 such that it can be moved so as to position different parts of the object 6 under the objective lens 1 of the optical system 200. Alternatively, the X-Y scanning mechanism 202 can also be attached to the optical system 200 while the object 6 remains stationary. The optical system 200 is then moved by the X-Y scanning mechanism 202 to scan the object 6.

The degree-of-focus of an object feature 45 is computed for all the images 40, 41, 42 and 43 (see Figure 6) acquired from the multiple imaging paths 3, 7, 9 and 12. An object feature 45 will appear more focused on one of the images 40, 41, 42 and 43 than the others. The height of the object feature 45 is classified according to the height plane of the imaging path that it is focused. This procedure is applied to all the object features and hence the height of all features are computed.

An exemplary design of the optical system used for the present invention is disclosed. The objective lens 1 is designed for finite conjugate imaging and is properly corrected for distortion at a selected band of wavelength. A thin lens model is used to model the objective lens 1.
The basic lens formula is given by

$$\frac{1}{u_1} + \frac{1}{v_1} = \frac{1}{f} \qquad (1)$$

where $u_1$ is the object distance 31 of the first imaging path 3: and $v_1$ is the corresponding image distance; $f$ is the effective focal length of the objective lens 1.

Rearranging equation (1) gives

$$v_1 = \frac{fu_1}{u_1 - f} \qquad (2)$$

The second imaging path 7 is focused at an object distance $u_1 - \delta$, 32; $\delta$ is the height resolution and $v_2$ is the corresponding image distance of the second imaging path 7 as follows:

$$v_2 = \frac{f(u_1 - \delta)}{u_1 - \delta - f} \qquad (3)$$

For the $n^{th}$ imaging path, the object distance is $u_1 - (n-1)\delta$; and $v_n$ is the image distance of the $n^{th}$ imaging path.

$$v_n = \frac{f[u_1 - (n-1)\delta]}{u_1 - (n-1)\delta - f} \qquad (4)$$

Using equation (4), the image sensors for the respectively image paths are positioned at $v_n$. Suitable compensation must also be applied to the image distance due to the different length of media. Some of the imaging paths consists of more glass media than air.

Let $I_1$, $I_2$, $I_3$,...$I_n$ be the images 40, 41, 42 and 43 acquired by the sensors 5, 8, 10 and 13 located at the different imaging paths 3, 7, 9 and 12 respectively. For image features whose height are between $u_1 + \delta/2$ and $u_1 - \delta/2$, they will appear focused on image $I_1$. Similarly, image features with height between $u_1 - (n-1)\delta + \delta/2$ and $u_1 - (n-1)\delta - \delta/2$ will appear focused on image $I_n$.

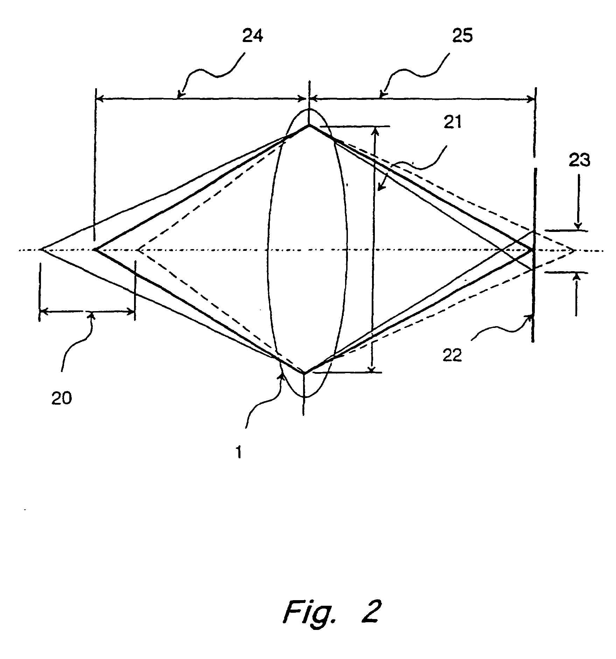

As shown in Figure 2, resolution of height measurable by the present invention is related to the depth-of-field of the optical system. The depth-of-field 20, D, of an optical system is given by

$$D(u) = \frac{2uafc(u-f)}{a^2f^2 - c^2(u-f)^2} \qquad (5)$$

where $u$ = object distance 24, $a$ = diameter of aperture 21, $f$ = effective focal length, and $c$ = circle of least confusion 23. Fig. 2 illustrates the depth-of-field effect of an optical system involving a thin lens model. The circle of least confusion 23, c, is dictated by the pixel size of the image sensor 5, 8, 10 & 13. The desired depth-of-field 20, D, of the optical system can be designed by varying the diameter of the aperture 21, $a$, and the effective focal length, $f$, of the objective lens 1.

The object features contained in the image consisting of the object are extracted by various image processing techniques. For those skilled in the art, image processing techniques such as region segmentation, edge detection and labelling can be used for feature extraction. An example of using the threshold-intensity-transform method is described hereinafter. The intensity of a pixel in the transformed image, $I_{out}$, is set to zero if its intensity in the original image, $I^{in}$ is less than the threshold, T; while pixel intensities larger than the threshold are preserved in the transformed image. Mathematically, the transformed image $I_{out}$ which consists of the extracted features are expressed in the following

$$I_{out} = 0; \text{ if } I_{in} < T$$

$$I_{out} = I_{in}; \qquad \text{if } I_{in} \geq T$$

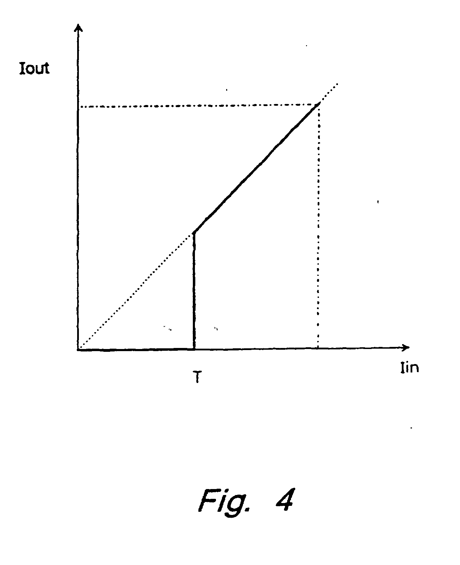

The threshold-intensity-transform method is illustrated in Fig 4. The threshold T is partially determined by the background noise level of the image and can be manually selected for a particular imaging system. In the threshold-intensity-transform image, pixels with zero intensity are treated as background while non-zero intensity pixels forming clusters are regarded as object features 45.

According to one aspect of the present invention, the best focal plane of a particular object feature 45 can be determined to determine the height of the object. For those skilled in the art of image processing, there are many ways of determining whether an object feature is focused on the image plane. References ( Eric Krotkov, "Focusing", International Journal of Computer Vision, Vol 1, page 223-237. 1987; and J.F. Schlag, A.C. Sanderson, G.P. Neumann, F. C. Wimberly, "Implementation of Automatic Focusing Algorithms for AComputer vision System with Camera Control," Carnegie Mellon University Technical Report, CMU-R1-TR-83-14, 1983) give good accounts of the image processing techniques for focus determination. These techniques can be used in the present invention.

An exemplary technique of determining the degree-of-focus of object features is disclosed hereinafter. For the sake of clarity, the solder paste is used as the object for illustration purpose. If an object feature of the object 6 is focused, the area of the object feature 45 is smallest and its intensity energy is highest. The area of the object feature 45 is computed by summing the total number of pixel that has non-zero intensity forming a cluster. The total intensity energy of the object feature 45 is calculated by summing all the intensity of pixels that belong to the object feature. As there are multiple imaging paths 3, 7, 9 & 12 forming multiple images 40, 41, 42 & 43, these two parameters, i.e. area and intensity energy, are computed for all the images $I_1$, $I_2$, $I_3$,...$I_n$ 40, 41, 42 and 43. An object feature 45 is considered focused on image $I_n$ when its area is the smallest and its intensity energy is highest on the $n^{th}$ image plane.

The computation of the area and intensity energy of an object feature 45, labelled $k$, can be formulated in the following:

$$A(k,n) = \sum_{xy \in k} \begin{cases} 1 & \text{if } I_n(x,y) \geq T \\ 0 & \text{if } I_n(x,y) < T \end{cases} \qquad (6)$$

$$S(k,n) = \sum_{xy \in k} I_n(x,y) \qquad (7)$$

where $A(k,n)$ is the area of an object feature $k$ in image $I_n$.

$S(k,n)$ is the intensity energy of an object feature $k$ in image $I_n$.

$$\textit{Best-focal-plane } (k) = \min \{A(k,n)\} \text{ \& } \max \{S(k,n)\} \text{ for all n images.} \qquad (8)$$

Fig. 6 illustrates an example for the determination of the best-focal-plane of an object feature. In this particular example, four images 40, 41, 42 and 43 are acquired from the respective sensors of the four imaging paths. An object feature 45 is found to be focused on image $I_3$ using equation (8). The height of this object feature 45 is therefore approximated to $u_3$.

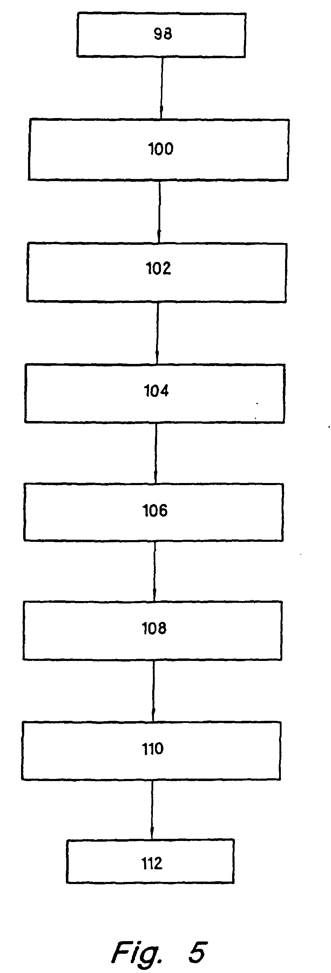

The overall procedure for measuring the height and calculating the volume of object features is illustrated in Fig. 5. Step 98 is the beginning of the procedure. At step 100, images are acquired into the host processor 15 memory. At step 102, pre-processing such as noise removal algorithms and intensity normalisation are applied. One such algorithm has been mentioned earlier is the threshold-intensity-transform method. At step 104, feature extraction algorithms such as edge detection is applied to detect the edges of object features 45. At step 106, the degree-of-focus of the object features 45 are computed for all the different images 40, 41, 42 & 43 acquired from the different imaging paths 3, 7, 9 & 12. At step 108, the degree-of-focus values from the different images 40, 41, 42 & 43 are used to compute the height each of the features 45. At step 110, volume of the object 6 can be computed.

The above procedure can be repeated for different areas of the object 6 when the object 6 is larger than the field of view of the optical system 200. Either the optical system 200 or the object 6 can be moved by the X-Y scanning mechanism 202. Hence, the height of a large area of the object 6 can be measured using the present invention.

It is noted that in the present invention, the light for imaging need not be a laser. Further, as shown in Figure 1, no pinhole is needed to block any of the light that travels toward the imaging sensor (e.g., CCD). In this way, a relatively optically and mechanically simple apparatus can be used to determine the height of features on objects such as printed circuit board assemblies.

## Claims

1. An apparatus for determining topographical variation on the surface of an object (6), comprising:

    a lens (1) that acquires images of the object (6);
    a plurality of beam splitters (2,4,11) that are cascaded to receive the images of the object (6) from the lens (1) and that split the images along multiple imaging paths;
    image sensors (5,8,10,13) that sense the images along the multiple imaging paths, wherein each of the image sensors is set to differing imaging distances from one another; and
    an image processor 15; **characterised in that**
    each of the image sensors includes multiple pixels to detect variation in the image from the corresponding imaging path; and **in that**
    the image processor (15) processes the sensed images to determine topographical values of the surface of the object (6) based on the variation within each of the sensed images as well as the variation among the sensed images.

2. The apparatus of claim 1, wherein the beam splitters, the lens, and the image sensors form an integrated optical system.

3. The apparatus of claims 1 or 2, further comprising a light source that illumines the surface that contains a plurality of features that rise above a plane to generate the images.

4. The apparatus of any preceding claim, wherein each of the image sensors (5,8,10,13) comprises charge-coupled devices (CCDs).

5. The apparatus of any preceding claim, wherein no pinhole is employed to cut off part of the image from the image sensors (5,8,10,13).

6. A method for determining topographical variation on the surface of an object (6) comprising:

    acquiring object light passing from the surface of the object (6) as a field of view to be split into different light paths and diverting it by focusing the same field of view to a distance farther than a plurality of beam splitters (2,4,11) used for splitting the beams;
    with the beam splitters (2,4,11) splitting repeatedly light passing from the surface associated with the field of view to obtain multiple beam paths;
    sensing light transmitted on each different light path to form an image of the field of view of the surface, the light paths having different path lengths due to the focusing on light detectors (5,8,10,13) used for the sensing to achieve different degree of focus on the image, each light detector including multiple pixels and detecting variation in the image from the corresponding imaging part, and
    determining topographical values of the surface of the object (6) based on the different in degree of focus on the light detectors (5,8,10,13) by processing the sensed images to determine topographical values of the surface of the object (6) based on the variation within each of the sensed images as well as the variation among the sensed images.

## Patentansprüche

1. Eine Vorrichtung zum Bestimmen einer topographischen Schwankung auf der Oberfläche eines Objektes (6), die folgende Merkmale umfaßt:

    eine Linse (1), die Bilder des Objektes (6) gewinnt;

    eine Mehrzahl von Strahlteilern (2, 4, 11), die kaskadenförmig angeordnet sind, um die Bilder des Objektes (6) von der Linse (1) zu empfangen, und die die Bilder entlang mehreren Abbildungswegen teilen;

Bildsensoren (5, 8, 10, 13), die die Bilder entlang den mehreren Abbildungswegen erfassen, wobei die Bildsensoren auf voneinander unterschiedliche Abbildungsabstände eingestellt sind; und

einen Bildprozessor (15), **dadurch gekennzeichnet, daß**

jeder der Bildsensoren mehrere Pixel umfaßt, um eine Schwankung in dem Bild von dem entsprechenden Abbildungsweg zu erfassen; und dadurch, daß

der Bildprozessor (15) die erfaßten Bilder verarbeitet, um topographische Werte der Oberfläche des Objekts (6) auf der Basis der Schwankung in jedem der erfaßten Bilder und der Schwankung zwischen den erfaßten Bildern zu erfassen.

2. Die Vorrichtung gemäß Anspruch 1, bei der die Strahlteiler, die Linse und die Bildsensoren ein integriertes optisches System bilden.

3. Die Vorrichtung gemäß Anspruch 1 oder 2, die ferner eine Lichtquelle umfaßt, die die Oberfläche beleuchtet, die eine Mehrzahl von Merkmalen enthält, die über eine Ebene ansteigen, um die Bilder zu erzeugen.

4. Die Vorrichtung gemäß einem der vorhergehenden Ansprüche, bei der jeder der Bildsensoren (5, 8, 10, 13) ladungsgekoppelte Bauelemente (CCDs) umfaßt.

5. Die Vorrichtung gemäß einem der vorhergehenden Ansprüche, bei der kein feines Loch verwendet wird, um einen Teil des Bildes von den Bildsensoren (5, 8, 10, 13) abzuschneiden.

6. Ein Verfahren zum Bestimmen einer topographischen Schwankung auf der Oberfläche eines Objekts (6), das folgende Schritte umfaßt:

Gewinnen von Objektlicht, das von der Oberfläche des Objekts (6) verläuft, als ein Sichtfeld, das in unterschiedliche Lichtwege geteilt werden soll, und Umleiten desselben durch Fokussieren des gleichen Sichtfelds auf einen Abstand, der weiter entfernt ist als eine Mehrzahl von Strahlteilern (2, 4, 11), die zum Teilen der Strahlen verwendet werden;

mit den Strahlteilern (2, 4, 11), wiederholtes Teilen von Licht, das von der Oberfläche verläuft, das dem Sichtfeld zugeordnet ist, um mehrere Strahlwege zu erhalten;

Erfassen von Licht, das auf jedem unterschiedlichen Lichtweg übertragen wird, um ein Bild des Sichtfelds der Oberfläche zu bilden, wobei die Lichtwege unterschiedliche Weglängen aufweisen, aufgrund des Fokussierens auf Lichtdetektoren (5, 8, 10, 13), die für das Erfassen verwendet werden, um einen unterschiedlichen Fokusgrad auf dem Bild zu erreichen, wobei jeder Lichtdetektor mehrere Pixel umfaßt, und Erfassen der Schwankung in dem Bild von dem entsprechenden Abbildungsteil, und

Bestimmen topographischer Werte der Oberfläche des Objekts auf der Basis der Unterschiede bei dem Fokusgrad auf den Lichtdetektoren (5, 8, 10, 13) durch Verarbeiten der erfaßten Bilder zum Bestimmen topographischer Werte der Oberfläche des Objekts (6) auf der Basis der Schwankung in jedem der erfaßten Bilder und auch der Schwankung zwischen den erfaßten Bildern.

**Revendications**

1. Dispositif pour déterminer une variation topographique à la surface d'un objet (6), comprenant:

- une lentille (1) qui acquiert des images de l'objet (6);

- une pluralité de diviseurs de faisceaux (2, 4, 11) qui sont montés en cascade de manière à recevoir les images de l'objet (6) à partir de la lentille (1) et qui divisent les images le long de trajets multiples de formation d'images;

- des capteurs d'images (5, 8, 10, 13) qui détectent les images le long des trajets multiples de formation d'images, chacun des capteurs d'images étant réglé sur des distances de formation d'images, qui diffèrent les unes des autres; et

- un processeur d'images (15);

**caractérisé en ce que**
chacun des capteurs d'images inclut de multiples pixels pour détecter une variation de l'image par rapport au trajet correspondant de formation d'images; et **en ce que** le processeur d'images (15) traite les images détectées pour déterminer des valeurs topographiques de la surface de l'objet (6) sur la base de la variation dans chacune des images détectées ainsi que la variation entre les images détectées.

2. Dispositif selon la revendication 1, dans lequel les diviseurs de faisceaux, la lentille et les capteurs d'images forment un système optique intégré.

3. Dispositif selon la revendication 1 ou 2, comprenant en outre une source de lumière qui éclaire la surface qui contient une pluralité de caractéristiques qui s'élève au-dessus d'un plan pour produire les images.

4. Dispositif selon l'une quelconque des revendications précédentes, dans lequel chacun des capteurs d'images (5, 8, 10, 13) comprend des dispositifs à couplage de charge (CCD).

5. Dispositif selon l'une quelconque des revendications précédentes, selon lequel aucun trou d'épingle n'est utilisé pour interrompre une partie de l'image provenant des capteurs d'images (5, 8, 10, 13).

6. Procédé pour déterminer une variation topographique à la surface d'un objet (6), comprenant:

- acquisition d'une lumière d'un objet transmis depuis la surface de l'objet (6) en tant que champ de vision destiné à être divisée en différents trajets de lumière, et déviation de cette lumière en focalisant le même champ de vision à une distance plus grande que celle d'une pluralité de diviseurs de faisceaux (2, 4, 11) utilisés pour diviser les faisceaux;
- division par les diviseurs de faisceau (2, 4, 11), de façon répétée, de la lumière transmise depuis la surface associée au champ de vision pour l'obtention de multiples trajets du faisceau;
- détecter la lumière transmise dans chaque trajet de lumière différent pour former une image du champ d'observation de la surface, les trajets de lumière ayant des longueurs différentes en raison de la focalisation sur des détecteurs de lumière (5, 8, 10, 13) utilisé pour la détection pour obtenir des degrés différents de focalisation sur l'image, chaque détecteur de lumière comprenant de multiples pixels et détectant une variation dans l'image à partir de la partie de formation d'image correspondante; et
- déterminer des valeurs topographiques sur la surface de l'objet (6) sur la base de la différence du degré de focalisation des détecteurs de lumière (5, 8, 10, 13) par traitement des images détectées pour déterminer des valeurs topographiques de la surface de l'objet (6) sur la base de la variation à l'intérieur de chacune des images détectées ainsi que sur la base de la variation entre les images détectées

*Fig. 1*

Fig. 2

$u_1 - 7\delta/2$

$u_1 - 5\delta/2$

$u_1 - 3\delta/2$

$u_1 - \delta/2$

$u_1 + \delta/2$

Fig. 3

*Fig. 4*

Fig. 5

Fig. 6